# EUROPEAN PATENT SPECIFICATION

(11) **EP 0 426 802 B1**
(45) Date of publication and mention of the grant of the patent: **06.04.1994**
(21) Application number: 90907001.3
(22) Date of filing: 09.05.1990
(51) Int. Cl.: A01N 65/00, A01N 59/02, A01N 31/02

(54) **AN ACARICIDAL COMPOSITION AND USE THEREOF IN DISINFESTING TREATMENTS**
AKARIZIDE ZUSAMMENSETZUNG UND IHRE VERWENDUNG IN DER BEFALLSBEKÄMPFUNG
COMPOSITION ACARICIDE ET UTILISATION DE CETTE COMPOSITION DANS LES TRAITEMENTS ANTIPARASITES

(30) Priority: 19.05.1989 IT 6736989
(43) Date of publication of application: 15.05.1991
(73) Proprietor: OFFICINE FERRARI S.N.C. DI CARLO E MARIO FERRARI & C., 10042 Nichelino (IT)
(72) Inventor: FERRARI, Carlo, I-10024 Moncalieri (IT)
(74) Representative: Robba, Eugenio
(86) International application number: EP9000744
(87) International publication number: WO9014012

(56) References cited:
- CH-A- 193 276
- DE-C- 1 767 616
- FR-A- 2 565 782
- Chemical Abstracts, vol. 82, no. 15, 14 April 1975 (Columbus, Ohio, US) B.C. Smith et al.: "Site preference and oviposition of Tetranychus urticae (Acarina: Tetranychidae) on bean with innocuous chemicals and pesticides", see page 129, abstract 94140p & Environ. Entomol. 1974, 3(4), 697-700
- Chemical Abstracts, vol. 49, no. 14, 25 July 1955 (Columbus, Ohio, US) H.U. Gubler et al.: "A new remedy specific against acarine disease", see column 9860f, & J. Suisse Apicult.50, 193-197(1953)
- Chemical Abstracts, vol. 49, no. 3, 10 February 1955 (Columbus, Ohio, US) G. Catar: "Effect of plant extracts on Ixodes Ricinus" see column 2002f, & Bratislav. Lekarské Listy, 34, 1004-1010 (1954)

## Description

The present invention relates to an acaricidal composition, particularly to a composition that is effective against the Varroa jacobsoni acarus.

The invention further refers to the use of such a composition in the struggle against mites, both as a pesticidal agent and for prophylaxis purpose.

It is known that the Varroa jacobsoni acarus, commonly called "Varroa", is a vermin of bees - particularly the Apis mellifica bee - that infests the hives causing heavy economical losses, settling as a preference in the male cells.

The treatments employed to fight the infestation of varroa are either mechanical or chemical.

Mechanical treatments consist in providing the beehives with traps exploiting the mite's preference for the male cells. However positive results are achieved slowly and are not very satisfying since the traps only limit the infestation.

The chemical treatments consist in applying synthetic pesticides. Under these conditions, there exists a toxicity problem for the beekeeper employing the pesticide, as well as a contamination problem of the produced honey, so that sanitary regulations forbid the treatment with such pesticides near the fertility time of the bees and for a certain time thereafter. Therefore the treatment with synthetic pesticides, although employed by many beekeepers, cannot be considered an effective solution in all respects.

It has now been found a composition that is effective against the Varroa Jacobsoni acarus and against many other kinds of mites, that is not a chemical product obtained by synthesis and therefore does not imply the above mentioned drawbacks of the known products. On the contrary, the composition according to the invention is a mixture of natural products that are well tolerated by the bees, as well as by the other animal or vegetable organisms that are infested by mites, and do not contaminate the honey.

Such an acaricidal composition according to the invention is generally made up by a mixture of elemental sulphur, crushed garlic bulbs and ethanol.

Garlic bulbs are obtained by the plant of the genus Allium, more particularly of the species Allium sativum. The bulblets are crushed, milled or more preferably reduced to a pulp to form a mush from which, through the use of ethanol, an alcoholic extract is obtained which contains the garlic active ingredients.

Elemental sulphur is used as a fine powder, preferably in the form known as "wettable ventilated sulphur".

Ethanol is both an active ingredient of the composition and the medium for the solution and the suspension of the other components thereof.

The composition according to the invention contains from 20 to 40% by weight of elemental sulphur, from 15 to 35% by weight of garlic bulbs, the balance being ethanol.

Depending upon the ethanol amount, the composition appears as a liquid or thick composition which is obtained by mixing the solid components in the liquid medium.

According to another characteristic of the invention, the composition also contains chili pepper, preferably of the species Capsicum annuum, of sour and piquant varieties, dried and reduced to powder. The amount of dried chili pepper in the mixture can be between 1 and 15% by weight of the total.

In the preferred embodiment including four components, the composition according to the invention contains from 20 to 40% of elemental sulphur, from 15 to 35% of crushed garlic bulbs, from 1 to 15% of chili pepper powder, and from 64 to 10% of ethanol, all the components being expressed by weight. The preferred composition contains 30% of elemental sulphur, 30% of garlic bulbs that have been crushed or reduced to a pulp, 30% of 99% by volume ethanol, and 30% of chili pepper powder, all the components being given by weight.

The composition is prepared by mixing the components in a vessel by means of a mechanical stirrer until a sufficiently homogeneous dispersion of the solid parts into the liquid or a paste is obtained with a consistency that depends upon the ethanol amount.

Then the composition is applied to the parts that have been infested by the mites, usually by smearing it with a brush.

If the product density so allows, it is possible also a spray application by means of devices that are commonly used for such purposes.

When used against Varroa, the composition is smeared over the side walls, bottom walls and over the cover of each hive, and if necessary the application is repeated until the substantial regress or the disappearance of the infestation.

The exact reasons why the composition is so effective as an acaricide agent have not yet been fully investigated and understood. It is supposed that each component carries out a germicidal and antiseptic action resulting in an overall effect that is as deadly to the mites as harmless to the infested organism, be it the bee or another animal or vegetable organism. The composition according to the invention has been particularly developed against the Varroa Jacobsoni acarus, since this latter causes quite damaging infestations in apiculture. Nevertheless the composition has been experimented also against other parisitic infestations, such as those affecting chickens or rosebushes, in both cases with positive effects.

Therefore the invention also includes the use of the composition as an acaricide agent, particularly against Varroa Jacobsoni acarus.

A few examples illustrating the invention are given hereinbelow.

### EXAMPLE 1

In a 250 ml vessel 40 g of double ventilated elemental sulphur and 45 g of 95% by volume ethanol are mixed. 15 g of garlic bulbs are added,in the form of bulblets that were deprived of the envelopping membrane, reduced to a pulp in a hydraulic squeezer of stainless steel, aluminum or plastic. Both the juice and the crushed fibrous portion of the garlic are added to the mixture of sulphur and ethanol. The mixture is then stirred by a mechanical stirrer until a homogeneous suspension is obtained.

The composition is applied by means of a brush over the area infested by the mites. After a few weeks a substantial regress of the infestation was reported.

### EXAMPLE 2

In a 250 ml vessel 20 g of double ventilated elemental sulphur, 35 g of garlic bulbs as obtained in example 1, and 45 g of 95% by volume ethanol are mixed. The mixture is stirred. In this way a suspension suitable to be applied by brushing or spraying over the area infested by the mites it obtained After a few weeks a substantial regress of the infestation was reported.

### EXAMPLE 3

In a 250 ml vessel 20 g of double ventilated elemental sulphur, 30 g of garlic bulbs as obtained in example 1, 45 g of 99% by volume ethanol and 5 g of dried chili pepper powder (Capsicum annuum) piquant variety are mixed. The mixture is stirred and the resulting suspension is applied by means of a brush over the side walls, the bottom wall and the cover of a hive for breeding Apis mellifica. After three months the hive was inspected and a substantial regression of the infestation was reported.

### EXAMPLE 4

In a 250 ml vessel 30 g of double ventilated elemental sulphur, 30 g of crushed garlic bulbs as obtained in example 1, 10 g of dried chili pepper powder (Capsicum annuum) piquant variety, and 30 g of 99% by volume ethanol are mixed. The mixture is stirred by means of a mechanical stirrer to a thick consistency.

The composition is applied to a hive for breeding Apis mellifica infested by Varroa Jacobsoni, located in nortwest Italy, by covering both the side walls and the bottom and the cover of the hive. The application was made in the month of June. The hive bottom was 30 x 30 cm. After about three months (at the end of August) the hive was inspected and a number of dead mites between 40,000 and 42,000 was counted on the hive bottom. The hive bottom has been cleaned and the treatment has been repeated using the same composition in the same way as above. After about two months (at the end of October) the hive has been inspected again. About 500 dead mites were counted on the hive bottom. After properly cleaning, the treatment has been applied again with the same composition. After about four months (at the end of February in the following year) the inspection was repeated and a single dead mite was found on the hive bottom. An examination of the bees showed the absence of the parasite.

The treatment neither influenced the breeding conditions, nor the quality of the produced honey.

The composition can also be used for prophylactic purposes against the mites, i.e. as a preventive treatment to avoid the infestation.

## Claims

1. An acaricidal composition comprising sulphur powder, garlic that has been ground or reduced to a pulp, and ethanol.

2. A composition as claimed in claim 1, characterized in that the sulphur amount is from 20 to 40% by weight, the garlic bulbs amount is from 15 to 35% by weight, the balance being ethanol.

3. A composition as claimed in the preceding claims, characterized in that it further comprises from 1 to 15% by weight of chili pepper powder.

4. A composition as claimed in claim 3, characterized in that it comprises from 20 to 40% of elemental sulphur, from 15 to 35% of crushed garlic bulbs, from 1 to 15% of chili pepper powder, and from 64 to 10% of ethanol.

5. A prophylaxis method against the infestation of the Varroa Jacobsoni acarus in apiculture comprising the application to the walls of the hives for bees breeding of a composition according to any of claims 1 to 4.

## Patentansprüche

1. Eine akarizide Zusammensetzung, welche Schwefelpulver, zu einem Brei zerriebenen oder in einen Brei verwandelten Knoblauch und Ethanol enthält.

2. Zusammensetzung nach Anspruch 1, dadurch gekennzeichnet, dass der Schwefelgehalt 20 bis 40 Gew.-%, die Menge an Knoblauchzwiebeln 15 bis 35 Gew.-% beträgt und der Rest Ethanol ist.

3. Zusammensetzung nach den vorstehenden Ansprüchen, dadurch gekennzeichnet, dass sie ferner 1 bis 15 % Chilipfefferpulver enthält.

4. Zusammensetzung nach Anspruch 3, dadurch gekennzeichnet, dass sie 20 bis 40 % elementaren Schwefel, 15 bis 35 % zerdrückte Knoblauchzwiebeln, 1 bis 15 % Chilipfefferpulver und 64 bis 10 % Ethanol enthält.

5. Vorbeugendes Verfahren zur Verhinderung eines Befalls durch Varroa jacobsoni acarus in der Bienenzucht, indem man die Wände der für die Aufzucht der Bienen vorgesehenen Bienenstöcke mit einer Zubereitung nach einem der Ansprüche 1 bis 4 behandelt.

## Revendications

1. Une composition acaricide comprenant du soufre en poudre, de l'ail moulu ou réduit à l'état de pulpe, et de l'éthanol.

2. Une composition selon la revendication 1, caractérisé en ce que la quantité de soufre est de l'ordre de 20 à 40% en poids, le quantité de gousses d'ail est de l'ordre de 15 à 35% en poids, le reste étant de l'éthanol.

3. Une composition selon les revendications précédentes, caractérisée en ce qu'elle comprend de plus de 1 à 15% en poids de poudre de piment.

4. Une composition selon la revendication 3, caractérisée en ce qu'elle comprend de 20 à 40% de soufre élémentaire, de 15 à 35% de gousses d'ail écrasées, de 1 à 15% de poudre de piment, et de 10 à 64% d'éthanol.

5. Un procédé prophylactique contra l'infection par les acariens Varroa Jacobsoni en apiculture, comprenant l'application, sur les parois des ruches d'abeilles, d'une composition selon l'une quelconque des revendications 1 à 4.
